(19) Europäisches Patentamt / European Patent Office / Office européen des brevets

(11) **EP 4 230 587 A1**

(12) **EUROPEAN PATENT APPLICATION**
published in accordance with Art. 153(4) EPC

(43) Date of publication:
**23.08.2023  Bulletin 2023/34**

(21) Application number: **21879995.5**

(22) Date of filing: **08.10.2021**

(51) International Patent Classification (IPC):
$C01G\ 53/00$ [(2006.01)]   $B01J\ 23/30$ [(2006.01)]
$B01J\ 37/08$ [(2006.01)]   $B01J\ 37/10$ [(2006.01)]
$C01B\ 13/08$ [(2006.01)]   $C25B\ 11/073$ [(2021.01)]

(52) Cooperative Patent Classification (CPC):
**B01J 23/30; B01J 37/08; B01J 37/10; C01B 13/08;
C01G 53/00; C25B 11/073;** Y02E 60/36;
Y02P 20/133

(86) International application number:
**PCT/JP2021/037341**

(87) International publication number:
**WO 2022/080256 (21.04.2022 Gazette 2022/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.10.2020   JP 2020173644
31.08.2021   JP 2021141835**

(71) Applicant: **Tokuyama Corporation
Shunan-shi, Yamaguchi 745-8648 (JP)**

(72) Inventors:
• **NAKAYAMA, Masaharu
Ube-shi, Yamaguchi 755-8611 (JP)**
• **TAKEDA, Airi
Ube-shi, Yamaguchi 755-8611 (JP)**
• **MARUYAMA, Heishi
Ube-shi, Yamaguchi 755-8611 (JP)**
• **AZUMA, Masanobu
Shunan-shi, Yamaguchi 745-8648 (JP)**

(74) Representative: **MERH-IP Matias Erny Reichl
Hoffmann
Patentanwälte PartG mbB
Paul-Heyse-Strasse 29
80336 München (DE)**

(54) **TUNGSTEN OXIDE AND OXYGEN EVOLUTION REACTION CATALYST**

(57)   An object of the present invention is to provide a compound with high catalytic activity that can be used as a catalyst for oxygen evolution reaction. Tungsten oxide represented by $Ni_xFe_{1-x}WO_4$ (wherein $0 < x < 1$). A catalyst for oxygen evolution reaction for use in an anodic electrode or a positive electrode, comprising the tungsten oxide. An electrolyzer comprising an anodic electrode chamber and a cathodic electrode chamber divided by an ion-permeable separating membrane, wherein an anodic electrode is arranged in the anodic electrode chamber and a cathodic electrode is arranged in the cathodic electrode chamber, and wherein the tungsten oxide represented by $Ni_xFe_{1-x}WO_4$ (wherein $0 < x < 1$) is supported on the anodic electrode as a catalyst.

[Fig. 3]

① $FeWO_4$
② $NiWO_4$
③ $p\text{-}Ni_{0.5}Fe_{0.5}WO_4$
④ $p\text{-}Ni_{0.2}Fe_{0.8}WO_4$
⑤ $p\text{-}Ni_{0.8}Fe_{0.2}WO_4$
⑥ $RuO_2$
⑦ $WO_3$

$i$ / mA cm$^{-2}$
$E$ / V vs RHE iR-corrected

EP 4 230 587 A1

## Description

### Technical Field

The present invention relates to tungsten oxide represented by $Ni_xFe_{1-x}WO_4$ (wherein $0 < x < 1$), a catalyst for oxygen evolution reaction comprising the tungsten oxide, and a method for producing the tungsten oxide.

### Background Art

In recent years, methods for producing hydrogen utilizing renewable energy have been attracting attention in order to solve problems such as global warming due to a greenhouse effect of carbon dioxide. The production of hydrogen utilizing renewable energy is required to lower cost so that it is comparable to that of the conventional method for producing hydrogen by reforming fossil fuels. Hydrogen production methods that can meet this requirement include electrolysis of water. A representative method of water electrolysis is alkaline water electrolysis. A power loss occurs upon the alkaline water electrolysis, and the main factors of the power loss include overpotential of an anodic electrode, overpotential of a cathodic electrode, an ohmic loss of an ion-permeable separating membrane, and an ohmic loss due to structural resistance of an electrolytic cell unit. If it is capable of reducing these power losses, the entire system can be miniaturized by enhancing a current density upon electrolysis in an electrolyzer, resulting in enabling significant reduction of equipment cost. Therefore, development of a catalyst capable of reducing the power losses has been desired.

Conventionally, ruthenium oxide, iridium oxide, and the like have been used as catalysts for oxygen evolution reaction, but these catalysts use precious metals, which are costly and limited resources. Therefore, utilization of tungsten oxide consisting of tungsten that is less costly and has more plentiful resources than precious metals, as a catalyst for the oxygen evolution reaction, has been investigated. Non-patent Document 1 describes $Co_{1-x}Fe_xWO_4$-CNT, a composite of $Co_{1-x}Fe_xWO_4$ and carbon nanotubes (CNTs), which is used as an oxygen evolution reaction (OER) catalyst. However, the document reports that the composite lowers its overpotential by being composited with carbon nanotubes, whereas overpotential of $Co_{0.5}Fe_{0.5}WO_4$ without being composited with the carbon nanotubes is higher, with a value of 420 mV. Moreover, Non-patent Document 2 reports use of Ni-Fe-W hydroxide as a catalyst for OER, and it is also composited with carbon fibers. Therefore, there has been demand for a compound that exhibits high catalytic activity without using precious metals such as ruthenium and iridium.

### Prior Art Documents

### Non-patent Documents

Non-patent Document 1: Composite Metal Oxide-Carbon Nanotube Electrocatalysts for the Oxygen Evolution and Oxygen Reduction Reactions, ChemElectroChem, 5, 2850-2856(2018)

Non-patent Document 2: Jie Xu, Mingshuo Wang, FeiYang, Xiaoqian Ju, Xilai Jia, "Self-Supported Porous Ni-Fe-W Hydroxide Nanosheets on Carbon Fiber: A Highly Efficient Electrode for Oxygen Evolution Reaction", Inorg. Chem. 58, 13037-13048 (2019).

### Summary of the Invention

### Object to be Solved by the Invention

An object of the present invention is to provide a compound with high catalytic activity that can be used as a catalyst for oxygen evolution reaction.

### Means to Solve the Object

The present inventors investigated a new compound with high catalytic activity that can be used as a catalyst for oxygen evolution reaction and have found that the compound represented by $Ni_xFe_{1-x}WO_4$ (wherein $0 < x < 1$) has very high catalytic activity. Although there was conventionally a literature describing use of various metal elements as M in the compound represented by $MWO_4$, a compound in which M was a combination of Ni and Fe, by which very high catalytic activity could be obtained, was not known.

Namely, the present invention can be identified according to the items described below:

(1) Tungsten oxide represented by $Ni_xFe_{1-x}WO_4$ (wherein $0 < x < 1$).

(2) A catalyst for oxygen evolution reaction for use in an anodic electrode or a positive electrode, comprising the tungsten oxide according to (1) above.

(3) A method for producing tungsten oxide represented by $Ni_xFe_{1-x}WO_4$ (wherein $0 < x < 1$), wherein a tungstate salt, a nickel salt, and an iron salt are dissolved in a polyol, and a polyol solution in which the salts are dissolved is heated to synthesize the tungsten oxide, or wherein a tungstate salt, a nickel salt, an iron salt, and water are added into a pressure-resistant vessel and heated to synthesize the tungsten oxide.

(4) An electrolyzer comprising an anodic electrode chamber and a cathodic electrode chamber divided by an ion-permeable separating membrane, wherein an anodic electrode is arranged in the anodic electrode chamber and a cathodic electrode is arranged in the cathodic electrode chamber, and wherein tungsten oxide represented by $Ni_xFe_{1-x}WO_4$ (wherein $0 < x < 1$) is supported on the anodic electrode as a catalyst.

(5) The electrolyzer according to (4) above, comprising a gas diffusion layer for supplying carbon dioxide to the cathodic electrode, wherein the carbon dioxide is reduced in the cathodic electrode chamber.

(6) The electrolyzer according to (4) above, comprising, on an opposite side of the cathodic electrode chamber, to a side facing the anodic electrode chamber, a carbon dioxide introduction part that introduces carbon dioxide so as to contact the cathodic electrode, wherein the carbon dioxide is reduced in the carbon dioxide introduction part.

(7) A method for electrolyzing salt water, wherein, in the electrolyzer according to (4) above, salt water comprising alkali is supplied to the anodic electrode chamber and salt water is supplied to the cathodic electrode chamber to electrolyze the salt water.

(8) A method for electrolyzing salt water as well as reducing carbon dioxide, wherein, in the electrolyzer according to (6) above, salt water comprising alkali is supplied to the anodic electrode chamber, salt water is supplied to the cathodic electrode chamber, and carbon dioxide is introduced into the carbon dioxide introduction part to electrolyze the salt water as well as reduce the carbon dioxide.

**Effect of the Invention**

The tungsten oxide of the present invention exhibits excellent catalytic activity when used as a catalyst for oxygen evolution reaction. The catalyst for oxygen evolution reaction of the present invention exhibits excellent catalytic activity by comprising the tungsten oxide of the present invention. The production method of the present invention can produce the tungsten oxide of the present invention.

**Brief Description of Drawings**

[Figure 1] Figure 1 is a view illustrating the XRD patterns of the samples obtained in Example 1 and Comparative Example 2.

[Figure 2] Figure 2 is a view illustrating the XRD patterns of the samples obtained in Examples 1 to 3 and Comparative Examples 1 and 2.

[Figure 3] Figure 3 is a view illustrating the linear sweep voltammograms of the samples obtained in Examples 1 to 3 and Comparative Examples 1 to 4.

[Figure 4] Figure 4 is a view illustrating the Tafel plots of the samples obtained in Examples 1 to 3 and Comparative Examples 1 to 4.

[Figure 5] Figure 5 is a view illustrating the XRD patterns of the sample obtained in Example 4.

[Figure 6] Figure 6 is a view illustrating the linear sweep voltammograms of the samples obtained in Examples 1 and 4 and Comparative Examples 1, 2, and 4.

[Figure 7] Figure 7 is a view illustrating the Tafel plots of the samples obtained in Examples 1 and 4 and Comparative Examples 1, 2, and 4.

[Figure 8] Figure 8 is a view illustrating the overpotential at a current density of 10 mA/cm$^2$ for Examples 1 to 3 and Comparative Examples 1 and 2.

[Figure 9] Figure 9 is a view illustrating the linear sweep voltammograms of Examples 1 to 3 and Comparative Examples 1 and 2.

[Figure 10] Figure 10 is a view illustrating the results of CV measurements of the sample obtained in Example 4.

[Figure 11] Figure 11 is a view plotting the relationship between the difference $\Delta j$ between a cathode current and an anode current and the sweep rate at a potential of 0.05 V vs Hg/HgO for each sample.

[Figure 12] Figure 12 is a view illustrating changes in turnover frequency when overpotential was changed.

[Figure 13] Figure 13 is a view illustrating the relationship between an elapsed time and potential in a durability test.

[Figure 14] Figure 14 is a view illustrating the results of a cycle test.

[Figure 15] Figure 15 is a view illustrating the XRD patterns of the samples obtained in Example 1 and Comparative Example 6, as well as that obtained by heating the sample obtained in Example 1 at 600°C.

[Figure 16] Figure 16 is a view illustrating the linear sweep voltammograms of the samples obtained in Example 1 and Comparative Example 6, as well as that obtained by heating the sample obtained in Example 1 at 600°C.

[Figure 17] Figure 17 is a view illustrating the Tafel plots of the samples obtained in Example 1 and Comparative Example 6, as well as that obtained by heating the sample obtained in Example 1 at 600°C.

[Figure 18] Figure 18 is a view illustrating the XRD patterns of samples obtained by heating the sample obtained in Example 1 at various temperatures.

[Figure 19] Figure 19 is a view illustrating the linear sweep voltammograms of samples obtained by heating the sample obtained in Example 1 at various temperatures.

[Figure 20] Figure 20 is a view illustrating the Tafel plots of samples obtained by heating the sample obtained in Example 1 at various temperatures.

[Figure 21] Figure 21 is a view illustrating the linear sweep voltammograms in Example 5.

[Figure 22] Figure 22 is a view illustrating the linear sweep voltammograms in Example 6.

[Figure 23] Figure 23 is a view illustrating the Tafel slopes and overpotential at 10 mA/cm$^2$ when pH was varied.

[Figure 24] Figure 24 is a view illustrating the linear sweep voltammograms in Comparative Example 7.

[Figure 25] Figure 25 is a view illustrating the linear sweep voltammograms in Comparative Example 8.

[Figure 26] Figure 26 is a schematic view illustrating one embodiment of the electrolyzer of the present invention.

[Figure 27] Figure 27 is a schematic view illustrating one embodiment of the electrolyzer of the present invention.

[Figure 28] Figure 28 is a schematic view illustrating one embodiment of the electrolyzer of the present invention.

**Mode of Carrying Out the Invention**

The tungsten oxide of the present invention is the compound represented by the chemical formula $Ni_xFe_{1-x}WO_4$ (wherein $0 < x < 1$). x is preferably 0.05 or more and 0.95 or less, preferably 0.10 or more and 0.90 or less, preferably 0.15 or more and 0.85 or less, preferably 0.2 or more and 0.8 or less, and more preferably 0.4 or more and 0.6 or less. Conventionally, ruthenium oxide, iridium oxide, and the like have been used as catalysts for oxygen evolution reaction, but the tungsten oxide of the present invention is superior in cost because it has a catalytic effect on oxygen evolution reaction without using precious metals such as ruthenium and iridium. Moreover, these metals have a problem of toxicity, whereas tungsten oxide has no toxicity problem. Furthermore, the tungsten oxide of the present invention is superior in catalytic activity than the case of using the precious metals. Conventionally, $Co_{1-x}Fe_xWO_4$ (wherein $0 < x < 1$), which is wolframite-type tungsten oxide comprising cobalt and iron, has been known as tungsten oxide with catalytic activity for oxygen evolution reaction, but the tungsten oxide represented by $Ni_xFe_{1-x}WO_4$ (wherein $0 < x < 1$), was not known. Known catalysts for oxygen evolution reaction consisting of nickel, iron, and tungsten are hydroxides and are different from the tungsten oxide of the present invention. The present invention is such that the tungsten oxide represented by $Ni_xFe_{1-x}WO_4$ (wherein $0 < x < 1$) was synthesized and found to be excellent as a catalyst for oxygen evolution reaction for one of the applications of the compound. The tungsten oxide of the present invention is preferably low-crystalline wolframite or a wolframite precursor that becomes wolframite upon heat treatment. Suitable crystallite sizes of the tungsten oxide of the present invention include 2.0 nm to 15.0 nm, 2.0 nm to 14.0 nm, 3.0 nm to 14.0 nm, or 3.0 nm to 7.0 nm.

The catalyst for oxygen evolution reaction of the present invention comprises the tungsten oxide of the present invention represented by $Ni_xFe_{1-x}WO_4$ (wherein $0 < x < 1$). The catalyst for oxygen evolution reaction of the present invention may consist only of the tungsten oxide of the present invention, or may comprise other compounds as long as it has catalytic activity, or may also be supported on a substrate such as a nickel foam, a carbon material, or a metal plate. The catalyst for oxygen evolution reaction of the present invention can be used for an anodic electrode or a positive electrode, for example, as a catalyst for oxygen evolution reaction in electrolysis, batteries, and the like, and for example, it can be used for an anodic electrode in water electrolysis, an air electrode (positive electrode) in metal-air batteries, and a counter electrode for reduction reaction in electrolysis of carbon dioxide. The tungsten oxide of the present invention used as a catalyst for oxygen evolution reaction can be a catalyst for oxygen evolution reaction with overpotential of 250 to 400 mV, 250 to 350 mV, or 300 to 350 mV to reach a current density of 10 mA/cm$^2$. The tungsten oxide of the present invention can also be a catalyst for oxygen evolution reaction with a Tafel slope in the range of 30 to 50 mVdec$^{-1}$, 30 to 45 mVdec$^{-1}$, or 30 to 40 mVdec$^{-1}$. In addition, the tungsten oxide of the present invention can be a catalyst for oxygen evolution reaction with an electrochemically active surface area in the range of 5 to 20 m$^2$/g or 5 to 15 m$^2$/g.

The method for producing the tungsten oxide of the present invention is not particularly limited, and examples thereof include a polyol method and a hydrothermal synthesis method. The polyol method is a method for dissolving a raw material salt in a polyol followed by heating the mixture to obtain a target product, and the hydrothermal synthesis method is a method for adding raw materials and water in a pressure-resistant sealed vessel and heating the mixture while sealing the vessel to obtain a target product. The polyol method comprises a step of dissolving various raw materials in a polyol and heating the polyol solution obtained in the above step, and when the tungsten oxide of the present invention is produced by the polyol method, the polyol used is not particularly limited, and examples thereof include ethylene glycol, propylene glycol, tetraethylene glycol, trimethylene glycol, tetramethylene glycol, diethylene glycol, dipropylene glycol, and polyethylene glycol. The salt to be dissolved in the polyol is salt comprising at least one of nickel, iron, and tungsten, which are the constituents of the tungsten oxide of the present invention, and is not particularly limited as long as it dissolves in the polyol for use, and these salts are used in combination and dissolved, so that the above three components are comprised in the polyol. Examples of tungsten sources include a tungstate salt. The tungstate salts include sodium tungstate, ammonium tungstate, and calcium tungstate. Nickel sources and iron sources include an acetate, a sulfate, a nitrate, and chloride of these sources. The heating temperature in the polyol method is not particularly limited, but is preferably a temperature in the vicinity of, or not higher than the boiling point of the polyol used as a solvent. The heating method is also not particularly limited, but is preferably refluxing at a temperature in the vicinity of the boiling point of the polyol used, since the most amount of heat can be applied at a normal pressure upon carrying out the synthesis reaction. A heating time can be appropriately selected as a time sufficient for the synthesis reaction to take place. For example, salt comprising nickel, salt comprising iron, and salt comprising tungsten are dissolved in a polyol. At this time, water may be added as appropriate, and the pH may be adjusted, if necessary. This solution is heated and refluxed. The heating temperature at this time varies depending on the type of polyol used, the amount of water added to the polyol, and the like, but it may be a temperature at which the aforementioned solution can be refluxed. The heating time is not particularly limited as long as the synthesis reaction is sufficiently carried out, and examples thereof include 30 minutes to 3 hours or 30 minutes to 2 hours. After heating, the temperature of the above solution is lowered to room temperature, and the solids can be collected by separation operations such as centrifugation to obtain the synthesized tungsten oxide of the present invention. Using a polyol as a solvent is considered to allow the polyol to act as a protective agent for a surface of the tungsten oxide particles produced and to prevent catalyst particles from growing due to aggregation thereof, resulting in enabling tungsten oxide having low overpotential, a large electrochemically active surface area, and high catalytic activity when used as a catalyst for oxygen evolution reaction, to be obtained. Moreover, the polyol method can synthesize tungsten oxide in a polyol at a normal pressure, thereby making it possible to be less expensive than a hydrothermal synthesis method requiring a pressure-resistant vessel.

In the case of producing the tungsten oxide of the present invention by the hydrothermal synthesis method, a raw material is not particularly limited as long as it is a substance dissolving in water at a predetermined temperature and pressure in a pressure-resistant vessel, and examples of tungsten sources include a tungstate salt. The tungstate salts include sodium tungstate, ammonium tungstate, and calcium tungstate. Examples of nickel sources and iron sources include respective salts thereof, which include an acetate, a sulfate, a nitrate, and a chloride. In the hydrothermal synthesis method, for example, a raw material for the tungsten source, a raw material for the nickel source, and a raw material for the iron source together with water are added into a pressure-resistant vessel and heated, and the mixture is reacted at a predetermined temperature and pressure for a predetermined time to enable production of tungsten oxide of the present invention. The temperature and pressure in the hydrothermal synthesis method can be appropriately selected according to the raw materials used, and examples of the temperature include 100 to 200°C, and the pressure in this case can be approximately 1 to 15 atmospheres. The synthesis time is not particularly limited as long as the synthesis reaction is sufficiently carried out, and examples of the synthesis time include 12 to 48 hours. Following the synthesis, the temperature and pressure in the pressure-resistant vessel are lowered, and the solids can be collected to obtain the tungsten oxide of the present invention.

The electrolyzer of the present invention comprises an anodic electrode chamber and a cathodic electrode chamber divided by an ion-permeable separating membrane, wherein an anodic electrode is arranged in the anodic electrode chamber and a cathodic electrode is arranged in the cathodic electrode chamber, and wherein the tungsten oxide of the present invention represented by $Ni_xFe_{1-x}WO_4$ (wherein $0 < x < 1$) is supported on the anodic electrode as a catalyst. The ion-permeable separating membrane in the present invention is not particularly limited as long as it is an ion-permeable separating membrane that can be used in an electrolyzer for electrolysis of an aqueous solution and the like, and examples of the ion-permeable separating membrane include a porous membrane consisting of asbestos or modified asbestos, a porous separating membrane using a polysulfone-based polymer, a cloth using polyphenylene sulfide fibers, a fluorine-based porous membrane, a porous separating membrane such as a porous membrane using a hybrid material comprising both an inorganic material and an organic material, and an ion-exchange membrane such as a fluorine-based ion-exchange membrane. The ion-permeable separating membrane in the present invention preferably has low gas permeability, low electrical conductivity, and high strength. The anodic electrode in the present invention has the tungsten oxide of the present invention supported on a conductive substrate as a catalyst. The conductive substrate is not particularly limited as long as it is a substrate that can be used as an electrode for electrolysis, and examples of the conductive substrate include nickel, a nickel alloy, nickel iron, vanadium, molybdenum, copper, silver, manganese, platinum group elements, graphite, or chromium, or combinations thereof. The conductive substrate may be a rigid substrate or a flexible substrate. Examples of the rigid conductive substrate include an expanded metal and a punched metal, and examples of the flexible conductive substrate include a wire mesh woven (or knitted) with metal wire. The method for supporting the tungsten oxide of the present invention onto the conductive substrate and the amount loaded are not particularly limited as long as the tungsten oxide of the present invention can contact an electrolytic solution and act as a catalyst, and examples of the supporting method include a method for covering the entire or partial surface of the conductive substrate, or a method for adhering the tungsten oxide to the entire or partial surface of the conductive substrate. The cathodic electrode in the present invention is not particularly limited as long as it is a substrate that can be used as an electrode for electrolysis, but it usually comprises a conductive substrate and a catalytic layer supported on a surface of the substrate. The conductive substrate is not particularly limited as long as it is a substrate that can be used as an electrode for electrolysis, and examples of the conductive substrate include nickel, a nickel alloy, stainless steel, mild steel, or stainless steel or mild steel with nickel plating thereon. The conductive substrate may be, for example, a rigid substrate or a flexible substrate. Examples of the rigid conductive substrate include an expanded metal and a punched metal, and examples of the flexible conductive substrate include a wire mesh woven (or knitted) with metal wire. The catalytic layers of the cathodic electrode include a catalytic layer comprising of a precious metal or precious metal oxide, nickel, cobalt, molybdenum, or manganese, or oxides thereof. In the anodic electrode chamber and cathodic electrode chamber in the present invention, the aforementioned anodic electrode and cathodic electrode are arranged, respectively.

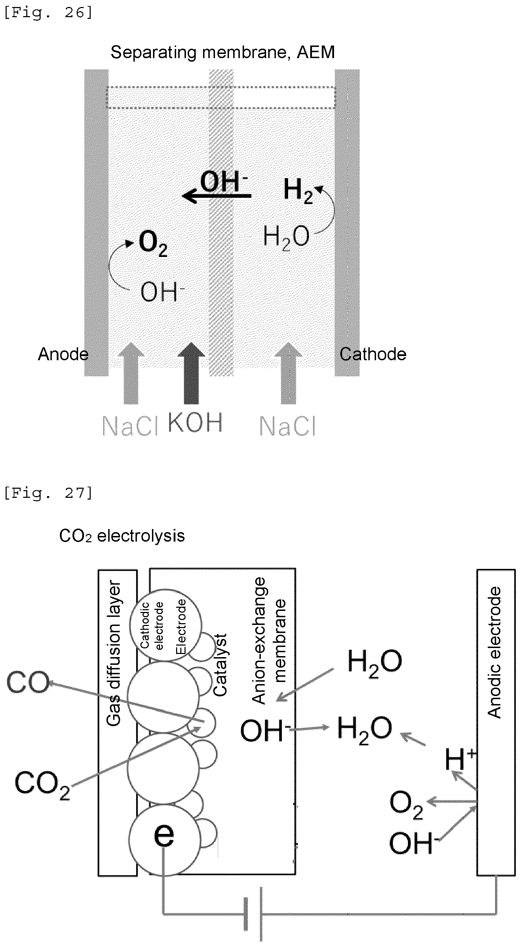

In the electrolyzer of the present invention, water comprising an electrolyte is supplied to the anodic electrode chamber and cathodic electrode chamber and electrolyzed, to produce oxygen in the anodic electrode chamber, and produce hydrogen in the cathodic electrode chamber. Figure 26 is a view schematically illustrating the configuration of the electrolyzer of the present invention. On the anode (anodic electrode), the tungsten oxide of the present invention is supported. The left hand side of the separating membrane is the anodic electrode chamber and the right hand side is the cathodic electrode chamber, and the anode (anodic electrode) is arranged in the anodic electrode chamber and the cathode (cathodic electrode) is arranged in the cathodic electrode chamber. In Figure 26, the anode and cathode are arranged at the ends of the anodic electrode chamber and cathodic electrode chamber, respectively, but they may be arranged at positions other than the ends, such as in the vicinity of the center. The anodic electrode chamber is supplied with water comprising NaCl and KOH, and the cathodic electrode chamber is supplied with water comprising NaCl. The separating membrane is an anion-permeable membrane, and OH⁻ moves from the cathodic electrode chamber to the anodic electrode chamber. Oxygen is produced in the vicinity of the anode, and hydrogen is produced in the vicinity of the cathode. With the electrolyzer of the present invention, salt water comprising alkali is supplied to the anodic electrode chamber, and salt water is supplied to the cathodic electrode chamber, allowing salt water to be electrolyzed. Here, the alkali refers to a compound that dissolves in water and exhibits basicity, and examples of the alkali include hydroxide of an alkali metal and hydroxide of an alkaline earth metal. Figure 26 shows an example in which KOH is used as alkali, but for example, NaOH, LiOH, and CsOH can be used in addition to KOH. Moreover, the salt water refers to an aqueous solution comprising NaCl. The electrolyzer of the present invention can also undergo alkaline water electrolysis, in which water comprising no NaCl but alkali is supplied to the anodic electrode chamber and cathodic electrode chamber, and the supplied water is electrolyzed, as well as can undergo alkaline salt water electrolysis, in which water comprising NaCl and alkali is supplied as described above, and the supplied water is electrolyzed.

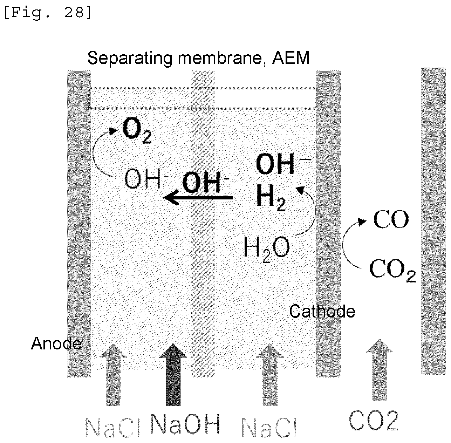

Further, in addition to the anodic electrode chamber, separating membrane, and cathodic electrode chamber, another embodiment of the electrolyzer of the present invention may comprise a gas diffusion layer for supplying carbon dioxide to a cathodic electrode, and carbon dioxide may be reduced. Figure 27 is a view schematically illustrating the configuration of such an electrolyzer. On the anodic electrode, the tungsten oxide of the present invention is supported. In Figure 27, the cathodic electrode and the carbon dioxide reduction catalyst on the cathodic electrode surface as well as the anion exchange membrane constitute a composite cathodic electrode. The gas diffusion layer is arranged on the opposite side of the cathodic electrode, to a side facing the anodic electrode, and carbon dioxide reaches the cathodic electrode and the catalyst on the cathodic electrode through this gas diffusion layer and is reduced to carbon monoxide. A KOH aqueous solution is supplied to the anodic electrode chamber and generates oxygen in the vicinity of the anodic electrode. In the present embodiment, the composite cathodic electrode also serves as the cathodic electrode chamber. The electrolyzer of the present invention can undergo alkaline water $CO_2$ electrolysis, in which carbon dioxide is reduced by electrolysis while alkaline water is electrolyzed. Further, in addition to the anodic electrode chamber, separating membrane, and cathodic electrode chamber, yet another embodiment of the electrolyzer of the present invention may comprise, on the opposite side of the cathodic electrode chamber, to a side facing the anodic electrode chamber, a carbon dioxide introduction part that introduces carbon dioxide so as to contact the cathodic electrode, and carbon dioxide may be reduced in the carbon dioxide introduction part. Figure 28 is a view schematically illustrating the configuration of such an electrolyzer. In Figure 28, the anodic electrode chamber is arranged on the left hand side of the separating membrane and the cathodic electrode chamber is arranged on the right hand side. The carbon dioxide introduction part is arranged on the right hand side of the cathodic electrode chamber, i.e., on the opposite side of the cathodic electrode chamber, to a side facing the anodic electrode chamber. Carbon dioxide introduced here comes into contact with the cathode and is reduced to carbon monoxide. The carbon dioxide introduction part is not particularly limited as long as carbon dioxide can be introduced so that the cathode contacts the carbon dioxide, and examples of the carbon dioxide introduction part include a structure with a passage through which carbon dioxide flows and a structure in which a gas diffusion layer is arranged. Water comprising NaCl and NaOH is supplied to the anodic electrode chamber, and water comprising NaCl is supplied to the cathodic electrode chamber, to thereby generate oxygen in the vicinity of the anode supporting the tungsten oxide of the present invention and generate hydrogen in the vicinity of the cathode. The electrolyzer of the present invention enables alkaline salt water $CO_2$ electrolysis, in which carbon dioxide is reduced by electrolysis while alkaline salt water is electrolyzed. The electrolyzers in Figures 27 and 28 and the electrolysis method using these electrolyzers utilize the excellent activity of the tungsten oxide catalyst of the present invention for oxygen evolution reaction, allowing the activity of the entire reaction system to be enhanced by the driving force from the oxygen evolution reaction to activate the carbon dioxide reduction reaction. So far, the method for reducing carbon dioxide to carbon monoxide has been exemplified as one example, but the present invention is not limited thereto. For example, other substances produced by the reduction of carbon dioxide include carbon compounds such as formic acid (HCOOH), methane ($CH_4$), methanol ($CH_3OH$), ethane ($C_2H_6$), ethylene ($C_2H_4$), ethanol ($C_2H_5OH$), formaldehyde (HCHO), acetaldehyde ($CH_3CHO$), acetic acid ($CH_3COOH$), ethylene glycol ($HOCH_2CH_2OH$), and 1-propanol ($CH_3CH_2CH_2OH$).

**Examples**

The present invention will be described by way of Examples, but the present invention is not limited to these specific embodiments.

[Example 1]

In a beaker, 25 mL of diethylene glycol was added, and hydrochloric acid diluted with distilled water was added to adjust the solution to have a pH of 5.5. The temperature of the solution after pH adjustment was raised to 70°C, and thereto were added 0.63 g of nickel(II) acetate tetrahydrate and 0.48 g of iron(II) acetate, and the mixture was stirred strongly with a stirrer until it became uniform. The solution in the beaker was transferred to a four-necked flask, and a solution in which 1.67 g of sodium tungstate dihydrate was dissolved in 2.5 mL of distilled water was added, and the temperature of the mixture was raised to 220°C in 15 to 20 minutes. This solution was refluxed at 220°C for 1 hour under strong stirring. After the reflux, the solution was cooled naturally to room temperature. To the resulting mixed solution were added acetic acid and ethanol, and the mixture underwent centrifugation several times, then only distilled water was added, and the mixture underwent centrifugation several times. The residue was vacuum dried at room temperature for 5 hours to obtain tungsten oxide (p-$Ni_{0.5}Fe_{0.5}WO_4$) incorporating nickel and iron at a ratio of 5:5.

[Example 2]

Tungsten oxide (p-$Ni_{0.2}Fe_{0.8}WO_4$) incorporating nickel and iron at a ratio of 2:8 was obtained by the same method as in Example 1, except that the amount of nickel (II) acetate tetrahydrate added was 0.25 g and the amount of iron(II) acetate added was 0.70 g.

[Example 3]

Tungsten oxide (p-$Ni_{0.8}Fe_{0.2}WO_4$) incorporating nickel and iron at a ratio of 8:2 was obtained by the same method as in Example 1, except that the amount of nickel (II) acetate tetrahydrate added was 1.0 g and the amount of iron(II) acetate added was 0.18 g.

[Example 4]

In a beaker, 25 mL of distilled water was added, the temperature was raised to 70°C, and thereto were added 0.11 g of nickel(II) chloride hexahydrate and 0.09 g of iron(II) chloride tetrahydrate. This solution was adjusted to have a pH of 5.5 by a sodium hydroxide aqueous solution and stirred with a stirrer for 10 minutes. Then, to the stirred solution was added a solution in which 0.3 g of sodium tungsten(IV) acid dihydrate was dissolved in 10 mL of distilled water, and the mixture was stirred for another 10 minutes. The solution in the beaker was transferred to a Teflon(R) vessel and heated in an autoclave at 180°C for 24 hours. After the heating, the solution was cooled naturally to room temperature. To the resulting mixed solution, ethanol was added, and the mixture underwent centrifugation several times, then only distilled water was added, and the mixture underwent centrifugation several times. The residue was vacuum dried at 60°C for 12 hours to obtain tungsten oxide (h-$Ni_{0.5}Fe_{0.5}WO_4$) incorporating nickel and iron at a ratio of 5:5.

[Comparative Example 1]

In a beaker, 25 mL of diethylene glycol was added and hydrochloric acid diluted with distilled water was added to adjust the solution to have a pH of 5.5. The temperature of the solution after pH adjustment was raised to 70°C, thereto was added 0.97 g of iron(II) acetate, and the mixture was stirred strongly with a stirrer until it became uniform. The solution in the beaker was transferred to a four-necked flask, and a solution in which 1.67 g of sodium tungstate dihydrate was dissolved in 2.5 mL of distilled water was added, and the temperature of the mixture was raised to 220°C in 15 to 20 minutes. This solution was refluxed at 220°C for 1 hour under strong stirring. After the reflux, the solution was cooled naturally to room temperature. To the resulting mixed solution were added acetic acid and ethanol, and the mixture underwent centrifugation several times, then only distilled water was added, and the mixture underwent centrifugation several times. The residue was vacuum dried at room temperature for 5 hours to obtain wolframite-type tungsten oxide $(FeWO_4)$ incorporating iron.

[Comparative Example 2]

In a beaker, 25 mL of diethylene glycol was added and hydrochloric acid diluted with distilled water was added to adjust the solution to have a pH of 5.5. The temperature of the solution after pH adjustment was raised to 70°C, thereto was added 1.26 g of nickel(II) acetate tetrahydrate, and the mixture was stirred strongly with a stirrer until it became uniform. The solution in the beaker was transferred to a four-necked flask, and a solution in which 1.67 g of sodium tungstate dihydrate was dissolved in 2.5 mL of distilled water was added, and the temperature of the mixture was raised to 220°C in 15 to 20 minutes. This solution was refluxed at 220°C for 1 hour under strong stirring. After the reflux, the solution was cooled naturally to room temperature. To the resulting mixed solution were added acetic acid and ethanol, and the mixture underwent centrifugation several times, then only distilled water was added, and the mixture underwent centrifugation several times. The residue was vacuum dried at room temperature for 5 hours to obtain wolframite-type tungsten oxide $(NiWO_4)$ incorporating nickel.

[Comparative Example 3]

$WO_3$ (purity: 95.0%, Wako Pure Chemical Industries, Ltd.) was prepared and used as a sample for Comparative Example 3.

[Comparative Example 4]

$RuO_2$ (purity: 99.9%, Sigma-Aldrich Co. LLC) was used as a sample for Comparative Example 4.

[Comparative Example 5]

$IrO_2$ (purity: 99% (99.9+%-Ir), Strem Chemicals, Inc.) was used as a sample for Comparative Example 5.

[Comparative Example 6]

In a beaker, 25 mL of diethylene glycol was added and hydrochloric acid diluted with distilled water was added to adjust the solution to have a pH of 5.5. The temperature of the solution after pH adjustment was raised to 70°C, thereto was added 0.63 g of nickel(II) acetate tetrahydrate and 0.48 g of iron(II) acetate, and the mixture was stirred strongly with a stirrer until it became uniform. The solution in the beaker was transferred to a four-necked flask, and the temperature was raised to 220°C in 15 to 20 minutes. This solution was refluxed at 220°C for 1 hour under strong stirring. After the reflux, the solution was cooled naturally to room temperature. To the resulting mixed solution were added acetic acid and ethanol, and the mixture underwent centrifugation several times, then only distilled water was added, and the mixture underwent centrifugation several times. The residue was vacuum dried at room temperature for 5 hours to obtain nickel iron oxide (p-NiFe oxide).

The samples obtained in Examples and Comparative Examples were characterized by the following methods.

(X-ray diffraction (XRD))

XRD patterns were obtained by an X-ray diffractometer (Rigaku Ultima 4) equipped with CuKα radiation (40kv, 40mA).

(Linear sweep voltammetry (LSV))

To a mixed solution comprising 350 μL of ethanol, 350 μL of water, and 95 μL of Nafion were added 5 mg of each sample and 5 mg of acetylene carbon black (conductive carbon), and the mixture underwent ultrasonic dispersion treatment for 60 minutes. 10 $\mu$L of the resulting dispersion was added dropwise to a disk electrode (5 mm in diameter) polished with alumina (amount of active material: 0.32 mg). The disk electrode was then dried at room temperature in air and used as a working electrode. A three-electrode cell was used, with a platinum mesh as a counter electrode and a Hg/HgO electrode (1M NaOH) as a reference electrode. 1M KOH purged with $N_2$ for 30 minutes was used as an electrolytic solution. The sweep rate was set at 1 mV/s, and the rotation speed was set at 1600 rpm in order to remove oxygen bubbles on the working electrode. The resistance of a solution produced between the working electrode and the reference electrode was compensated for with a feedback rate of 60%. Oxygen evolution reaction produces protons, thereby lowering a pH of the electrolytic solution and changing water-oxidation potential. Calibration to a reversible hydrogen electrode (RHE) allows an effect of pH to be canceled. The equation $E_{RHE} = 0.059 \times 14 + 0.123 + E_{Hg/HgO}$ was used for the calibration. The pH was 14.

(Cyclic voltammetry)

To a mixed solution comprising 350 $\mu$L of ethanol, 350 $\mu$L of water, and 95 $\mu$L of Nafion were added 5 mg of each sample and 5 mg of acetylene carbon black (conductive carbon), and the mixture underwent ultrasonic dispersion treatment for 60 minutes. 10 $\mu$L of the resulting dispersion was added dropwise to a disk electrode (5 mm in diameter) polished with alumina (amount of active material: 0.32 mg). The disk electrode was then dried at room temperature in air and used as a working electrode. A three-electrode cell was used, with a platinum mesh as a counter electrode and a Hg/HgO electrode as a reference electrode. 1M KOH purged with $N_2$ for 30 minutes was used as an electrolytic solution. The sweep rate was set at 20 mV/s, and the electrode system was subjected to cycling (approximately 100 cycles) between 0 and +1 V, the range where the Faraday reaction was not observed.

(Durability test (chronopotentiometry; CP))

To a mixed solution comprising 350 $\mu$L of ethanol, 350 $\mu$L of water, and 95 $\mu$L of Nafion were added 5 mg of each sample and 5 mg of acetylene carbon black (conductive carbon), and the mixture underwent ultrasonic dispersion treatment for 60 minutes. 10 $\mu$L of the resulting dispersion was added dropwise to a disk electrode (5 mm in diameter) polished with alumina (amount of active material: 0.32 mg). The disk electrode was then dried at room temperature in air and used as a working electrode. A three-electrode cell was used, with a platinum mesh as a counter electrode and Hg/HgO as a reference electrode. 1M KOH purged with $N_2$ for 30 minutes was used as an electrolytic solution. The constant current density of 10 mA/cm$^2$ was maintained for 24 hours. The working electrode was rotated at 1600 rpm as in linear sweep voltammetry.

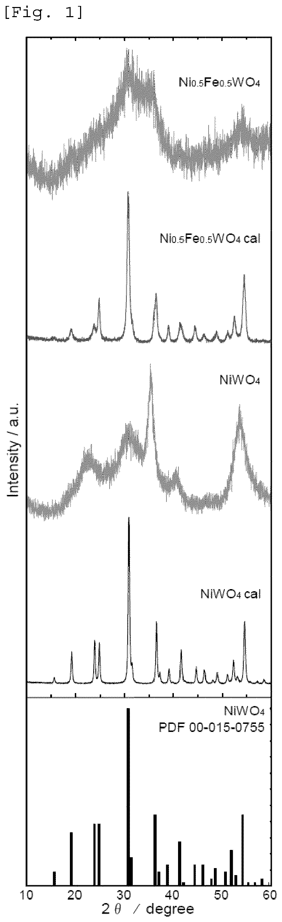

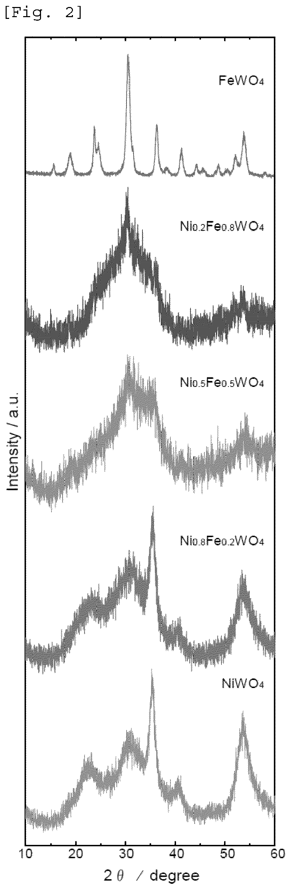

The XRD patterns of the samples obtained in Example 1 and Comparative Example 2 are shown in Figure 1. $Ni_{0.5}Fe_{0.5}WO_4$ in Figure 1 denotes the XRD pattern of the sample obtained in Example 1, and $Ni_{0.5}Fe_{0.5}WO_4$ cal denotes the XRD pattern after heating the sample obtained in Example 1 at 600°C for 3 hours in air. In addition, $NiWO_4$ in Figure 1 denotes the XRD pattern of the sample obtained in Comparative Example 2, and $NiWO_4$ cal denotes the XRD pattern after heating the sample obtained in Comparative Example 2 at 600°C for 3 hours. Both samples have crystal structures typical of wolframite after being heated at 600°C, and therefore it can be deemed that the obtained samples are wolframite precursors, or are low-crystalline wolframite having the same composition, i.e., having the same composition as wolframite and are in the undeveloped crystalline state. Figure 2 shows the XRD patterns of the samples obtained in Examples 1 to 3 and Comparative Examples 1 and 2. From top to bottom, the XRD patterns of Comparative Example 1 ($FeWO_4$), Example 2 (p-$Ni_{0.2}Fe_{0.8}WO_4$), Example 1 (p-$Ni_{0.5}Fe_{0.5}WO_4$), Example 3 (p-$Ni_{0.8}Fe_{0.2}WO_4$), and Comparative Example 2 ($NiWO_4$) are shown. The samples obtained in Examples 2 and 3 also demonstrated the XRD patterns similar to those of the sample obtained in Example 1.

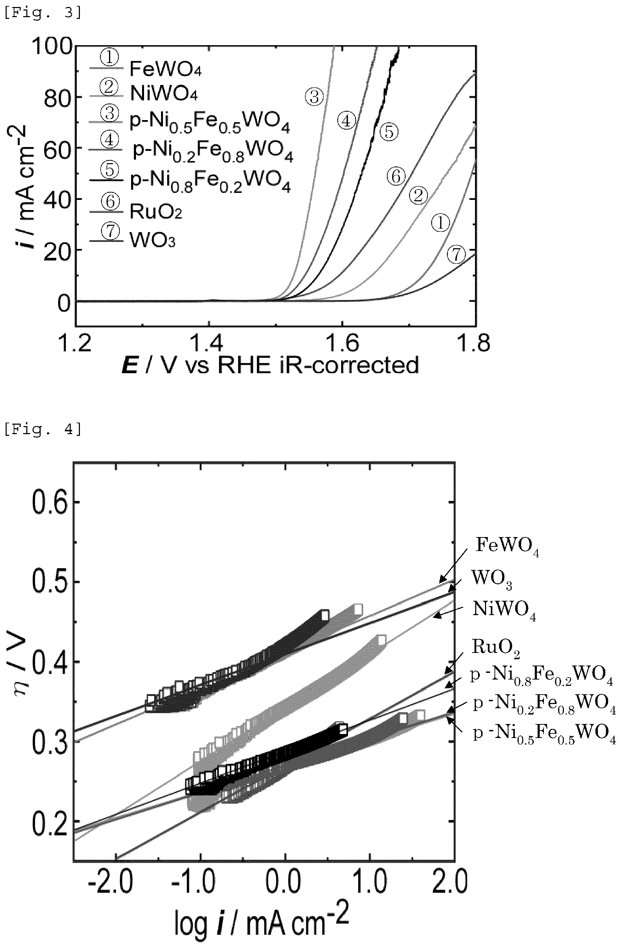

Figure 3 shows the linear sweep voltammograms of the samples obtained in Examples 1 to 3 and Comparative Examples 1 to 4. As is clear from Figure 3, the samples obtained in Examples 1 to 3 exhibited the sharp rise in current and had much higher catalytic activity than $RuO_2$ having the best catalytic performance for oxygen evolution reaction.

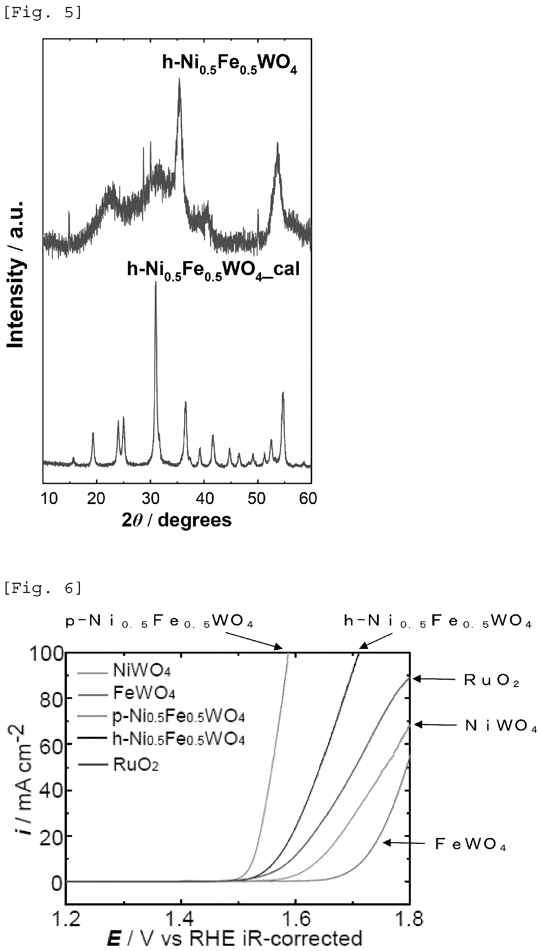

Figure 5 shows the XRD patterns of the sample obtained in Example 4. h-$Ni_{0.5}Fe_{0.5}WO_4$ in Figure 5 is the XRD pattern of the sample obtained in Example 4, and h-$Ni_{0.5}Fe_{0.5}WO_4$ cal is the XRD pattern after heating the sample obtained in Example 4 at 600°C for 3 hours. The "h-" is a symbol indicating the sample obtained by the hydrothermal synthesis method. For the samples obtained in Examples 1 to 3, the "p-" symbol is added in order to indicate that they were obtained by the polyol method. Figure 5 shows that the sample obtained in Example 4 also has a crystal structure typical of wolframite after being heated at 600°C, and therefore it can be deemed that the obtained sample is a wolframite precursor, or is low-crystalline wolframite having the same composition, i.e., having the same composition as wolframite and is in the undeveloped crystalline state. Linear sweep voltammograms of the samples obtained in Examples 1 and 4 and Comparative Examples 1, 2, and 4 are shown in Figure 6. As is clear from Figure 6, the samples obtained in Examples 1 and 4 exhibited the sharp rise in current, low overpotential required for reaching 10 mA/cm$^2$ or 100 mA/cm$^2$, and much higher catalytic activity than $RuO_2$ having the best catalytic performance for oxygen evolution. In addition, the sample in Example 1, synthesized by the polyol method, exhibited the sharper rise than the sample in Example 4, synthesized by the hydrothermal synthesis method.

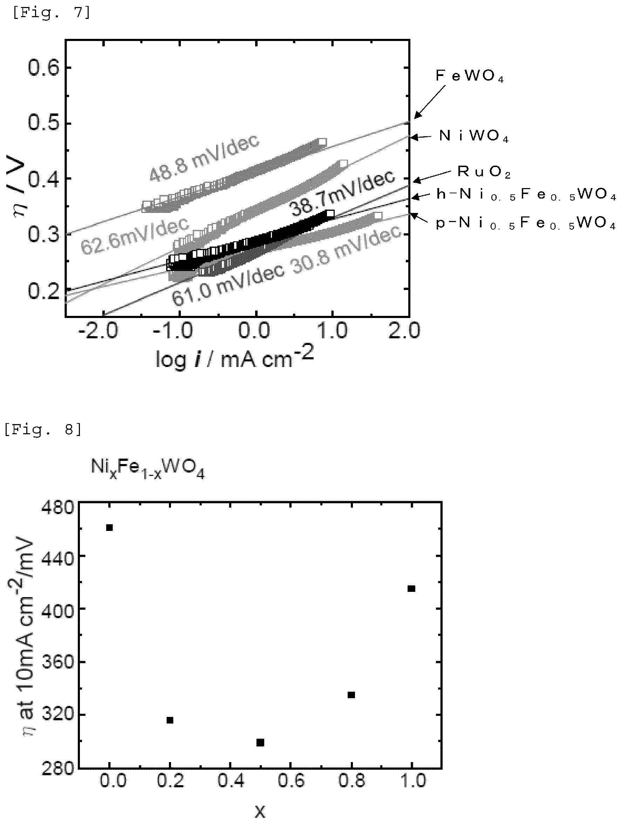

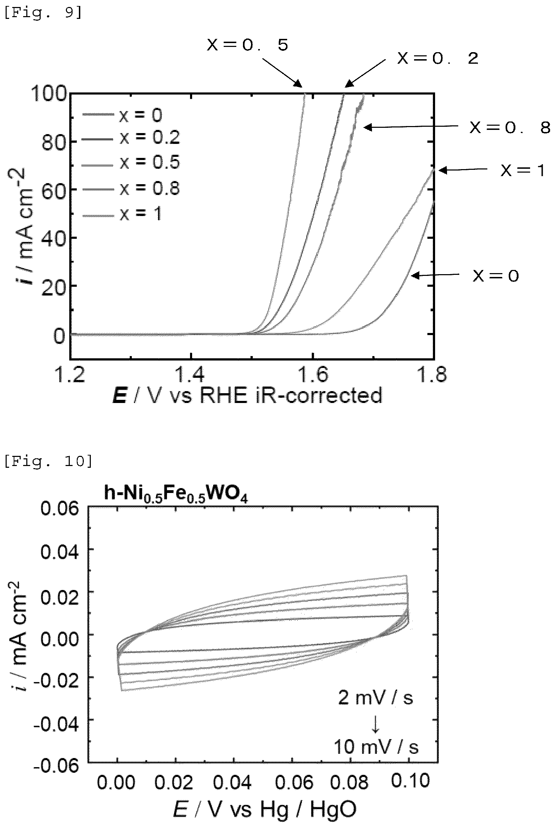

Tafel plots were created in order to analyze the rising portions in Figures 3 and 6. Figure 4 shows the plots obtained by plotting common logarithms of the current densities in Figure 3 on the abscissa and the differences (overpotential) from the standard potential of 1.23 V for water oxidation on the ordinate. Figure 7 also shows similar plots for Figure 6. The parameters calculated from Figures 3 and 4 as well as Figures 6 and 7 (starting overpotential is defined as the endpoint on the low-potential side of the linear region in Figure 4 or Figure 7) are shown in Table 1. The Tafel slope was calculated from the overlap of the plot and the straight line in Figure 4 or Figure 7 and approximated by the Tafel equation $[\eta = a + b \cdot \log(j)]$ where a is a Tafel constant, b is a Tafel slope, and j is a current density. The samples obtained in Examples 1 to 4 exhibit the starting overpotential comparable to that of $RuO_2$ (Comparative Example 4), and the overpotential at a current density of 10 mA/cm² is lower than that of the $RuO_2$ (Comparative Example 4) sample. Furthermore, the Tafel slope is also smaller than that of the $RuO_2$ (Comparative Example 4) sample. The Tafel slope is a potential difference required for increasing a current value by a factor of 10; a smaller value indicates faster reaction rate and more active reaction, and also indicates fast electron transfer in water oxidation. Table 1 demonstrates the results that the samples obtained in Examples 1 to 4 have extremely faster reaction rates than $RuO_2$ (Comparative Example 4) and the samples obtained in other Comparative Examples. Figure 8 is a view illustrating the overpotential of Examples 1 to 3 and Comparative Examples 1 and 2 at a current density of 10 mA/cm², indicating that the overpotential is significantly lowered when nickel and iron are incorporated compared to when nickel is singly incorporated or when iron is singly incorporated. Figure 9 is a view where only the results of Examples 1 to 3 and Comparative Examples 1 and 2 are extracted from the linear sweep voltammograms in Figure 3.

[Table 1]

|  | Tafel slope (mVdec$^{-1}$) | Starting overpotential (mV) | Overpotential at 10mA/cm² (mV) |
|---|---|---|---|
| Example 1 (p-Ni$_{0.5}$Fe$_{0.5}$WO$_4$) | 30.8 | 247 | 297 |
| Example 2 (p-Ni$_{0.5}$Fe$_{0.8}$WO$_4$) | 30.6 | 248 | 314 |
| Example 3 (p-Ni$_{0.8}$Fe$_{0.2}$WO$_4$) | 40.4 | 250 | 333 |
| Example 4 (h-Ni$_{0.5}$Fe$_{0.5}$WO$_4$) | 38.7 | 250 | 338 |
| Comparative Example 1 (FeWO$_4$) | 48.8 | 393 | 459 |
| Comparative Example 2 (NiWO$_4$) | 62.6 | 304 | 413 |
| Comparative Example 3 (WO$_3$) | 44.1 | 337 | 524 |
| Comparative Example 4 (RuO$_2$) | 60.1 | 251 | 365 |
| Comparative Example 5 (IrO$_2$) | 46.1 | 249 | 333 |
| Comparative Example 6 (p-NiFe oxide) | 54.7 | 250 | 344 |

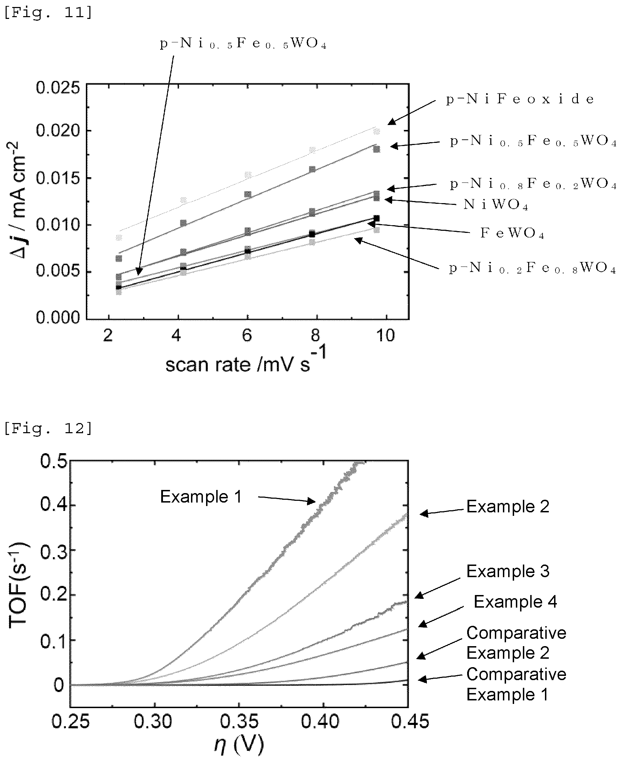

Next, a reaction surface area (electrochemically active surface area: ECSA) of each of the samples obtained in Examples 1 to 4 and Comparative Examples 1, 2, and 6 was determined. For this purpose, an electrochemical double layer capacitance (Cdl), which is proportional to ECSA, was calculated for each sample by cyclic voltammetry (CV). Figure 10 shows the results of CV measurement for the sample obtained in Example 4. The CV potential range was 0 to 0.1 V, the range in which the Faraday reaction was not observed. Cdl was calculated from the plot of the relationship between the difference Δj between the cathodic current and the anodic current at a specific potential for each sample (0.05 V vs Hg/HgO) and the sweep rate (Figure 11). The slope of the approximated line obtained from the plot corresponds to Cdl. ECSA is calculated from the equation ECSA = Cdl/Cs where Cs is the specific capacitance of a sample per unit area or a capacitance of an atomically smooth surface of a material under the same electrolyte conditions. Cs that was 0.040 mF/cm², a typical value for Cs in 1.0 M KOH, was used. The Cdl and ECSA calculated are shown in Table 2. It is found that in Example 4, the catalyst with a very large ECSA was obtained. The magnitude of the current obtained by using the catalyst is considered to be determined by multiplication of (i) the intrinsic reaction rate at an active site and (ii) the quantity of active sites (i.e., the size of area electrochemically utilized). Since (i) is reflected on the Tafel slope and (ii) on ECSA, a large ECSA enhances catalytic activity. Moreover, the catalysts obtained in Examples 1 to 3 have smaller ECSA than others, but have excellent catalytic activity due to the smaller Tafel slope and faster intrinsic reaction rate.

[Table 2]

|  | Cdl (mF/cm$^2$) | ECSA (m$^2$/g) |
|---|---|---|
| Example 1 (p-Ni$_{0.5}$Fe$_{0.5}$WO$_4$) | 0.87 | 6.77 |
| Example 2 (p-Ni$_{0.2}$Fe$_{0.8}$WO$_4$) | 0.83 | 6.46 |
| Example 3 (p-Ni$_{0.8}$Fe$_{0.2}$WO$_4$) | 1.11 | 8.67 |
| Example 4 (h-Ni$_{0.5}$Fe$_{0.5}$WO$_4$) | 1.45 | 11.33 |
| Comparative Example 1 (FeWO$_4$) | 0.942 | 7.36 |
| Comparative Example 2 (NiWO$_4$) | 1.04 | 8.13 |
| Comparative Example 6 (p-NiFe oxide) | 1.39 | 10.86 |

Turnover frequency (TOF) was determined for each of Examples 1 to 4 and Comparative Examples 1, 2, and 6 from the following equation. The results are shown in Table 3 and Figure 12.

```
TOF = [current density (Acm⁻²) × electrode surface area
(cm²)]/[4 × F (96485 Cmol⁻¹) × total mole (mol) of transition
metals of the catalyst on the electrode].
```

[Table 3]

|  | TOF (s$^{-1}$) at 0.4 V |
|---|---|
| Example 1 (p-Ni$_{0.5}$Fe$_{0.5}$WO$_4$) | 0.425 |
| Example 2 (p-Ni$_{0.2}$Fe$_{0.8}$WO$_4$) | 0.238 |
| Example 3 (p-Ni$_{0.8}$Fe$_{0.2}$WO$_4$) | 0.106 |
| Example 4 (h-Ni$_{0.5}$Fe$_{0.5}$WO$_4$) | 0.072 |
| Comparative Example 1 (FeWO$_4$) | 0.001 |
| Comparative Example 2 (NiWO$_4$) | 0.020 |
| Comparative Example 6 (p-NiFe oxide) | 0.057 |

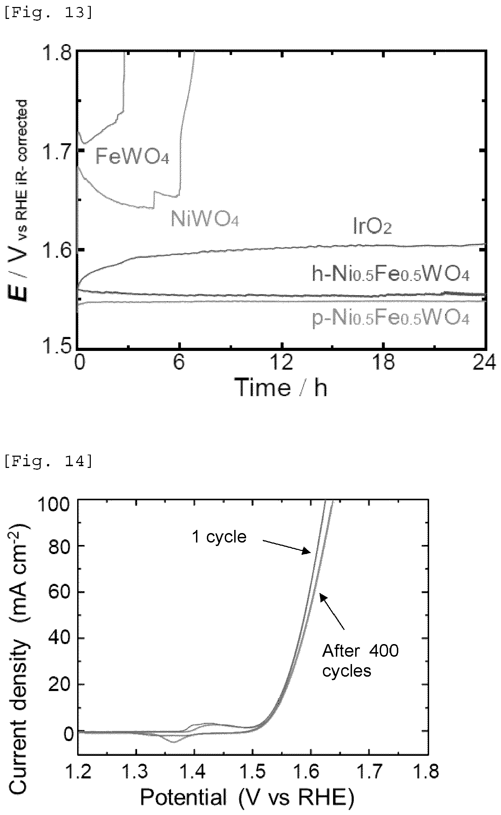

Figure 13 shows the results of durability tests on p-Ni$_{0.5}$Fe$_{0.5}$WO$_4$ obtained in Example 1, h-Ni$_{0.5}$Fe$_{0.5}$WO$_4$ obtained in Example 4, FeWO$_4$ obtained in Comparative Example 1, NiWO$_4$ obtained in Comparative Example 2, and IrO$_2$ (99% (99.9+%-Ir), manufactured by Strem Chemicals, Inc.) in Comparative Example 5. FeWO$_4$ had a rapid increase in potential with an elapsed time of about 3 hours after starting the test. In addition, delamination of the catalyst film from the substrate was observed. This phenomenon is considered to be due to oxidation to FeO$_4^{2-}$ at high potential and dissolution. NiWO$_4$ increased its potential with an elapsed time of about 4.5 hours after starting the test, and rapidly increased the potential with an elapsed time of about 6 hours. The visual observation of the catalyst film confirmed that oxygen bubbles adhered to the catalyst surface and the catalyst film was partially delaminated from the substrate with an elapsed time of about 4.5 hours, and then further delamination of the catalyst film was observed with an elapsed time of about 6 hours. This suggests that the catalyst film was physically destroyed by generation of oxygen bubbles on the catalyst surface. IrO$_2$ increased the overpotential by nearly 1.0 V from the initial potential in 24 hours. It is deemed that this is because the diffusion resistance between the reactant (H$_2$O) and the product (O$_2$) was raised. p-Ni$_{0.5}$Fe$_{0.5}$WO$_4$ and h-Ni$_{0.5}$Fe$_{0.5}$WO$_4$ had no increase in potential in 24 hours, achieving excellent long-term durability. This is considered due to the fact that the oxidation to FeO$_4^{2-}$ did not occur because they continued the operation at the potential lower than that of FeWO$_4$ by approximately 170 mV. The tungsten oxide of the present invention thus has excellent durability as a catalyst. Figure 14 shows the results of the cycle test carried out at 20 mVs$^{-1}$ by using the three-electrode cell using the working electrode fabricated with p-Ni$_{0.5}$Fe$_{0.5}$WO$_4$, fabricated in Example 1, the platinum mesh as a counter electrode,

and a Hg/HgO electrode as a reference electrode, and using 1M KOH purged with $N_2$ for 30 minutes as an electrolytic solution, as in the durability test described above. As shown in Figure 14, the current response changed little between the first cycle and after 400 cycles. It is also suggested that the physical break of the catalyst film was inhibited by the rapid diffusion of the oxygen produced. Table 4 shows the potential at 10 mA/cm$^2$ in LSV and the holding potential at 10 mA/cm$^2$ in CP for p-Ni$_{0.5}$Fe$_{0.5}$WO$_4$, h-Ni$_{0.5}$Fe$_{0.5}$WO$_4$, and IrO$_2$ used in the durability test.

[Table 4]

| Catalyst | Potential at 10mA/cm$^2$ in LSV (V) | Holding potential at 10mA/cm$^2$ in CP (V) |
|---|---|---|
| p-Ni$_{0.5}$Fe$_{0.5}$WO$_4$ | 1.527 | 1.547 |
| h-Ni$_{0.5}$Fe$_{0.5}$WO$_4$ | 1.568 | 1.554 |
| IrO$_2$ | 1.563 | 1.603 |

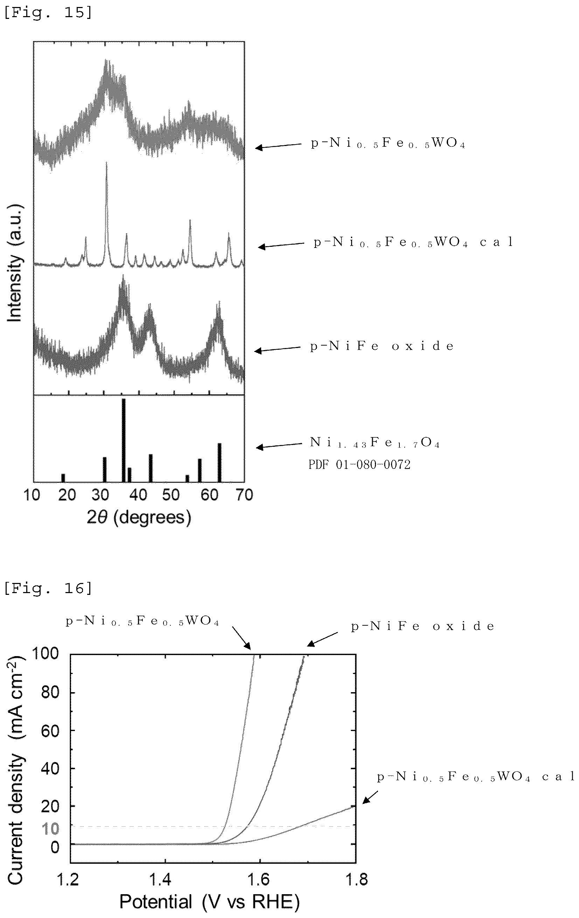

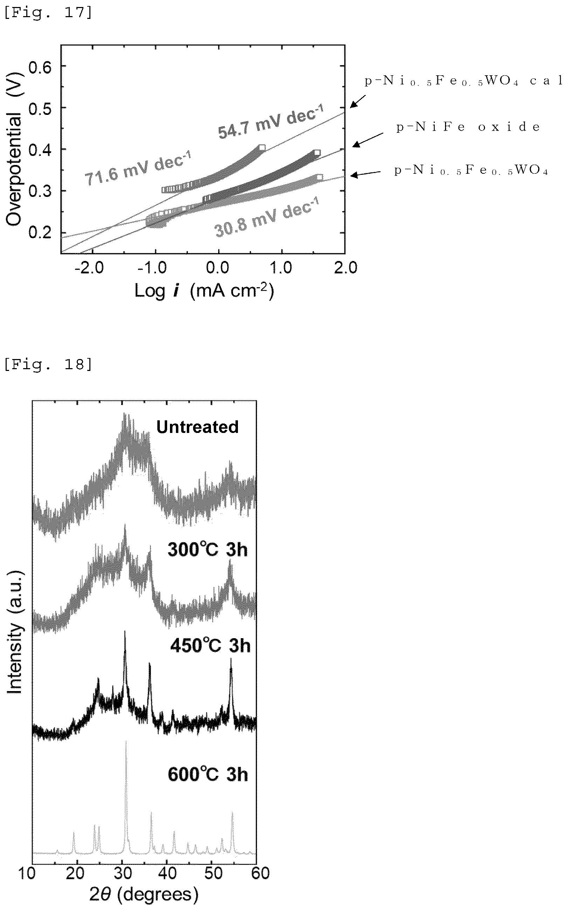

The XRD patterns, linear sweep voltammograms, and Tafel plots of p-Ni$_{0.5}$Fe$_{0.5}$WO$_4$ fabricated in Example 1, the sample obtained by heating this at 600°C for 3 hours, and p-NiFe oxide fabricated in Comparative Example 6 are shown in Figures 15, 16, and 17, respectively. The sample obtained by heating p-Ni$_{0.5}$Fe$_{0.5}$WO$_4$ at 600°C for 3 hours (p-Ni$_{0.5}$Fe$_{0.5}$WO$_4$ cal) had a wolframite phase, while the sample without heating had an undeveloped wolframite phase. Moreover, p-NiFe oxide had a trevolite phase and was assigned to Ni$_{1.43}$Fe$_{1.7}$O$_4$ according to the Rigaku database. The sample obtained by heating p-Ni$_{0.5}$Fe$_{0.5}$WO$_4$ fabricated in Example 1 at 600°C for 3 hours did not have such high catalytic activity for oxygen evolution. The XRD patterns, linear sweep voltammograms, and Tafel plots of p-Ni$_{0.5}$Fe$_{0.5}$WO$_4$ fabricated in Example 1, and the samples obtained by heating this at 300°C for 3 hours, at 450°C for 3 hours, and at 600°C for 3 hours are shown in Figures 18, 19, and 20, respectively. Not only the sample without heating (untreated), but also the samples heated at 300°C and at 450°C exhibited the sharp rise in current and had excellent catalytic activity for oxygen evolution. The crystallite size of each sample was calculated by using the Scherrer equation below.

$$\text{Crystallite size} = K\lambda/(\beta\cos\theta)$$

(wherein K is a Bragg constant (= 0.9), $\lambda$ is a wavelength of X-ray used (CuK$\alpha$ radiation: 1.54051 Å), $\beta$ is half width of the peak at 30°, and $\theta$ is a Bragg angle (1/2 of a diffraction angle 2$\theta$)).
As a result, the crystallite size of p-Ni$_{0.5}$Fe$_{0.5}$WO$_4$ without heating was 5.0 nm, the crystallite size of that heat-treated at 300°C was 6.4 nm, the crystallite size of that heat-treated at 450°C was 13.0 nm, and the crystallite size of that heat-treated at 600°C was 16.8 nm. The tungsten oxide of the present invention is preferably low-crystalline wolframite or a wolframite precursor that becomes wolframite upon heat treatment.

[Example 5]

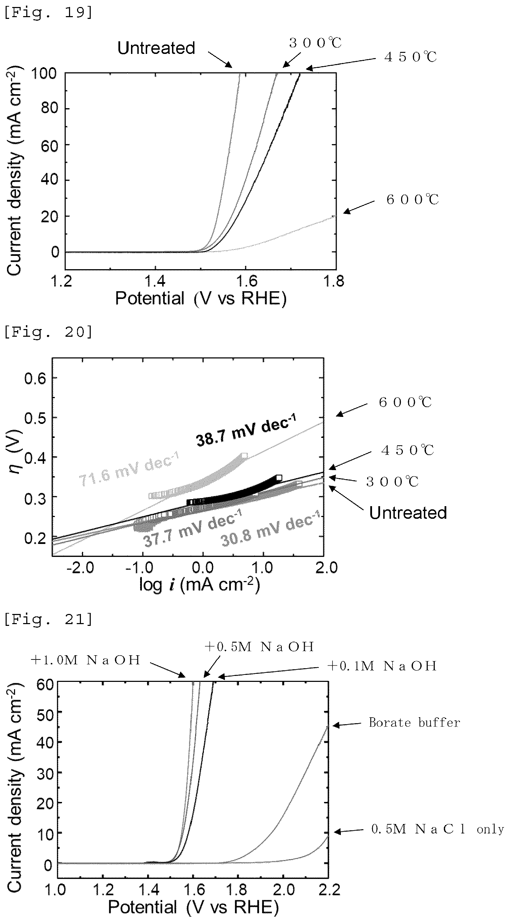

To a mixed solution comprising 350 $\mu$L of ethanol, 350 $\mu$L of water, and 95 $\mu$L of Nafion were added 5 mg of the p-Ni$_{0.5}$Fe$_{0.5}$WO$_4$ sample fabricated in Example 1 and 5 mg of acetylene carbon black (conductive carbon), and the mixture underwent ultrasonic dispersion treatment for 60 minutes. 10 $\mu$L of the resulting dispersion was added dropwise to a disk electrode (5 mm in diameter) polished with alumina (amount of active material: 0.32 mg). The disk electrode was then dried at room temperature in air and used as a working electrode. A three-electrode cell was used, with a platinum mesh as a counter electrode and a Hg/HgO electrode (1M NaOH) as a reference electrode. The electrolytic solutions used were a 0.5 M NaCl aqueous solution, an aqueous solution comprising 0.5 M NaCl and 0.1 M NaOH (+0.1 M NaOH), an aqueous solution comprising 0.5 M NaCl and 0.5 M NaOH (+0.5 M NaOH), an aqueous solution comprising 0.5 M NaCl and 1.0 M NaOH (+1.0 M NaOH), and an aqueous solution comprising 0.5 M NaCl and a 0.1 M borate buffer. 1 M KOH purged with $N_2$ for 30 minutes was used. The sweep rate was set at 1 mV/s, and the rotation speed was set at 1600 rpm to remove oxygen bubbles on the working electrode. The resistance of the solution generated between the working electrode and the reference electrode was compensated for with a feedback rate of 60%. The oxygen evolution reaction produces protons, thereby reducing the pH of the electrolytic solution and changing water oxidation potential. Calibration to a reversible hydrogen electrode (RHE) allows an effect of pH to be canceled. The equation $E_{RHE} = 0.059 \times 14 + 0.123 + E_{Hg/HgO}$ was used for the calibration. The obtained linear sweep voltammograms (LSV) is shown in Figure 21. Note that the descriptions in the parentheses following the descriptions of the aqueous solutions described above indicate the notations in Figure 21.

[Example 6]

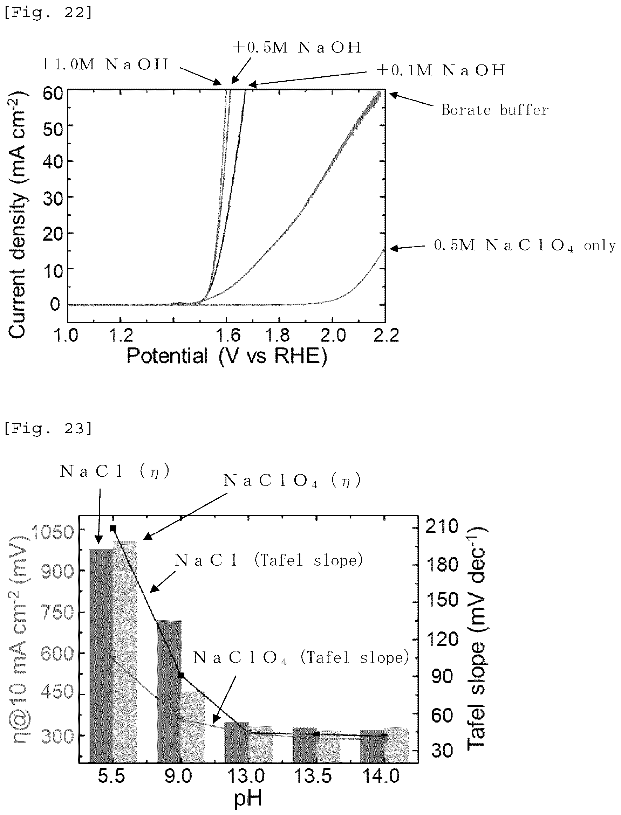

The same operations and treatments as in Example 5 were carried out except that the electrolytic solutions used were a 0.5 M $NaClO_4$ aqueous solution, an aqueous solution comprising 0.5 M $NaClO_4$ and 0.1 M NaOH (+0.1 M NaOH), an aqueous solution comprising 0.5 M $NaClO_4$ and 0.5 M NaOH (+0.5 M NaOH), an aqueous solution comprising 0.5 M $NaClO_4$ and 1.0 M NaOH (+1.0 M NaOH), and an aqueous solution comprising 0.5 M $NaClO_4$ and a 0.1 M borate buffer in Example 5. The linear sweep voltammetry (LSV) obtained is shown in Figure 22. Note that the descriptions in the parentheses following the descriptions of the aqueous solutions above indicate the notations in Figure 22.

In Examples 5 and 6, the Tafel slope and the overpotential ($\eta$) at 10 mA/cm$^2$ were investigated. The pH of the 0.5 M NaCl aqueous solution in Example 5 was 5, the pH of the aqueous solution comprising 0.5 M NaCl and 0.1 M NaOH was 13, the pH of the aqueous solution comprising 0.5 M NaCl and 0.5 M NaOH was 13.5, the pH of the aqueous solution comprising 0.5 M NaCl and 1.0 M NaOH was 14, and the pH of the aqueous solution comprising 0.5 M NaCl and a 0.1 M borate buffer was 9. The pH of the 0.5 M $NaClO_4$ aqueous solution in Example 6 was 5, the pH of the aqueous solution comprising 0.5 M $NaClO_4$ and 0.1 M NaOH was 13, the pH of the aqueous solution comprising 0.5 M $NaClO_4$ and 0.5 M NaOH was 13.5, the pH of the aqueous solution comprising 0.5 M $NaClO_4$ and 1.0 M NaOH was 14, and the pH of the aqueous solution comprising 0.5 M $NaClO_4$ and a 0.1 M borate buffer was 9. The Tafel slope at each pH and the overpotential ($\eta$) at 10 mA/cm$^2$ is shown in Figure 23.

[Comparative Example 7]

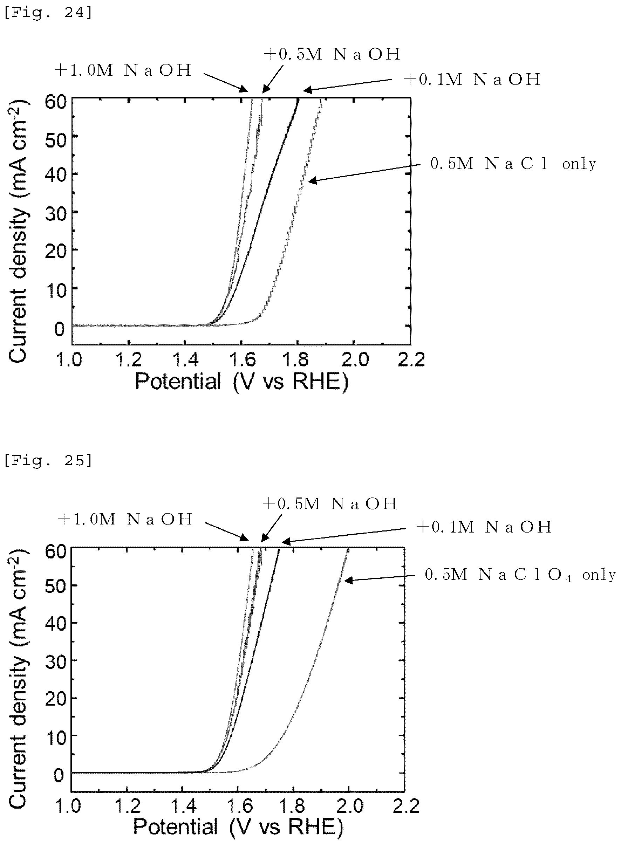

The same operations and treatments as in Example 5 were carried out except that $IrO_2$ of Comparative Example 5 was used instead of p-$Ni_{0.5}Fe_{0.5}WO_4$ in Example 5. The linear sweep voltammetry (LSV) obtained is shown in Figure 24.

[Comparative Example 8]

The same operations and treatments as in Example 6 were carried out except that $IrO_2$ of Comparative Example 5 was used instead of p-$Ni_{0.5}Fe_{0.5}WO_4$ in Example 6. The linear sweep voltammetry (LSV) obtained is shown in Figure 25.

The 0.5 M NaCl aqueous solution in Example 5 is an aqueous solution that mimics seawater. Figure 21 for Example 5 demonstrates that the tungsten oxide of the present invention exhibited the sharp rise in current and had high catalytic activity for oxygen evolution by adding alkali to the 0.5 M NaCl aqueous solution. Therefore, the tungsten oxide of the present invention is excellent as a catalyst for oxygen evolution reaction for alkaline seawater electrolysis. In addition, the electrolyzer with the tungsten oxide of the present invention supported on the anodic electrode as a catalyst is excellent as an electrolyzer for hydrogen evolution by alkaline seawater electrolysis because the oxygen evolution reaction at the anodic electrode is enhanced, thereby enhancing the hydrogen evolution reaction at the cathodic electrode as well. In Figure 22 for Example 6 as well, the addition of alkali to the 0.5 M $NaClO_4$ aqueous solution also allows the sharp rise in current to be exhibited, which indicates that the tungsten oxide of the present invention had high catalytic activity for oxygen evolution reaction. In Example 6, no chlorine ions are comprised in the aqueous solution due to the $NaClO_4$ aqueous solution used, thereby generating no chlorine gas ($Cl_2$). The LSV in Example 5 is almost the same as the LSV in Example 6, indicating that almost no chlorine gas is generated even in Example 5, which comprises chloride ions in the aqueous solution.

Furthermore, with the p-$Ni_{0.5}Fe_{0.5}WO_4$ electrode used in Example 5, constant-current electrolysis was carried out at 10 mA/cm$^2$ until the amount of electricity passed reached 40 C/cm$^2$ (= 10 mA/cm$^2$ × 4000 s), and the residual chlorine concentration in the test solution after the electrolysis was measured by the general iodine titration method. The measurement was conducted by adding potassium iodide to the test solution after the electrolysis and titrating free iodine with a sodium thiosulfate solution. The Faraday efficiency of chlorine generation (chlorine generation efficiency) was determined by the following formula:

$$\text{Faraday efficiency (\%) of chlorine generation} = ([Cl_2] \times V)/\{Q/(nF)\} \times 100$$

(wherein n is the number of electrons involved (= 2) ($2Cl^- \rightarrow Cl_2 + 2e^-$), V is volume of the test solution, Q is the amount of electricity passed, and F is a Faraday constant (= 96,485 C/mol)).

The results showed that the Faraday efficiency of chlorine generation was 16% for the 0.5 M NaCl aqueous solution, 0.3% for the aqueous solution comprising 0.5 M NaCl and 0.1 M NaOH, 0.2% for the aqueous solution comprising 0.5 M NaCl and 0.5 M NaOH, 0.1% for the aqueous solution comprising 0.5 M NaCl and 1.0 M NaOH, and 0.3% for the aqueous solution comprising 0.5 M NaCl and a 0.1 M borate buffer, and these results also indicate that using the tungsten oxide of the present invention as a catalyst can inhibit generation of chlorine gas that is a toxic gas and can generate oxygen in electrolysis of salt water such as seawater. The $IrO_2$ electrode used in Comparative Example 7 was also used to measure the residual chlorine concentration in the test solution after electrolysis by using the same test method and measurement method as for the $p-Ni_{0.5}Fe_{0.5}WO_4$ electrode described above. It is found from the results that the chlorine generation efficiency was 47% for the 0.5 M NaCl aqueous solution, 0.6% for the aqueous solution comprising 0.5 M NaCl and 0.1 M NaOH, 0.5% for the aqueous solution comprising 0.5 M NaCl and 0.5 M NaOH, 0.1% for the aqueous solution comprising 0.5 M NaCl and 1.0 M NaOH, and 0.6% for the aqueous solution comprising 0.5 M NaCl and a 0.1 M borate buffer. These results indicate that the use of the tungsten oxide of the present invention as a catalyst can inhibit generation of chlorine species upon oxygen evolution more than the use of $IrO_2$, which is conventionally used as a catalyst exhibiting high activity for the oxygen evolution reaction.

Figure 23 also shows that the tungsten oxide of the present invention, when used as a catalyst, has high oxygen evolution reaction activity at a pH of 9 or greater, 10 or greater, 11 or greater, 12 or greater, or 13 or greater. Comparative Examples 7 and 8 are examples in which $IrO_2$ conventionally used as a catalyst exhibiting high activity for the oxygen evolution reaction was used, and the results are shown in Figures 24 and 25. Comparing Figures 21 and 22, showing the results in the case of using the tungsten oxide of the present invention, with Figures 24 and 25, showing the results in the case of using $IrO_2$, it is found that the tungsten oxide of the present invention has smaller overpotential of reaching 60 mA/cm$^2$ at a pH of 13 or greater than $IrO_2$ and has superior activity to an $IrO_2$ catalyst in alkaline seawater (salt water) electrolysis.

**Industrial Applicability**

The tungsten oxide of the present invention can be suitably used as a catalyst for oxygen evolution reaction in electrolysis, batteries, and the like, and, for example, it can be used as an anodic electrode in water electrolysis, an air electrode (positive electrode) in metal-air batteries, and a counter electrode for reduction reaction in electrolysis of carbon dioxide. As for water electrolysis, the tungsten oxide of the present invention can be used as catalysts for electrolysis such as alkaline water electrolysis, alkaline seawater (salt water) electrolysis, alkaline $CO_2$ electrolysis, and alkaline $CO_2$ seawater (salt water) electrolysis. Further, since the electrolyzer of the present invention comprises the tungsten oxide of the invention as a catalyst, it can be suitably used as electrolyzers in various electrolysis such as water electrolysis, and for example, it can be suitably used as electrolyzers for electrolysis such as alkaline water electrolysis, alkaline seawater (salt water) electrolysis, alkaline $CO_2$ electrolysis, and alkaline $CO_2$ seawater (salt water) electrolysis. The production method of the present invention is suitable as a method for producing such tungsten oxides.

**Claims**

1. Tungsten oxide represented by $Ni_xFe_{1-x}WO_4$ (wherein $0 < x < 1$).

2. A catalyst for oxygen evolution reaction for use in an anodic electrode or a positive electrode, comprising the tungsten oxide according to claim 1.

3. A method for producing tungsten oxide represented by $Ni_xFe_{1-x}WO_4$ (wherein $0 < x < 1$),

   wherein a tungstate salt, a nickel salt, and an iron salt are dissolved in a polyol, and a polyol solution in which the salts are dissolved is heated to synthesize the tungsten oxide, or
   wherein a tungstate salt, a nickel salt, an iron salt, and water are added into a pressure-resistant vessel and heated to synthesize the tungsten oxide.

4. An electrolyzer comprising an anodic electrode chamber and a cathodic electrode chamber divided by an ion-permeable separating membrane, wherein an anodic electrode is arranged in the anodic electrode chamber and a cathodic electrode is arranged in the cathodic electrode chamber, and wherein tungsten oxide represented by $Ni_xFe_{1-x}WO_4$ (wherein $0 < x < 1$) is supported on the anodic electrode as a catalyst.

5. The electrolyzer according to claim 4, comprising a gas diffusion layer for supplying carbon dioxide to the cathodic electrode, wherein the carbon dioxide is reduced in the cathodic electrode chamber.

6. The electrolyzer according to claim 4, comprising, on an opposite side of the cathodic electrode chamber, to a side facing the anodic electrode chamber, a carbon dioxide introduction part that introduces carbon dioxide so as to contact the cathodic electrode, wherein the carbon dioxide is reduced in the carbon dioxide introduction part.

7. A method for electrolyzing salt water, wherein, in the electrolyzer according to claim 4, salt water comprising alkali is supplied to the anodic electrode chamber and salt water is supplied to the cathodic electrode chamber to electrolyze the salt water.

8. A method for electrolyzing salt water as well as reducing carbon dioxide, wherein, in the electrolyzer according to claim 6, salt water comprising alkali is supplied to the anodic electrode chamber, salt water is supplied to the cathodic electrode chamber, and carbon dioxide is introduced into the carbon dioxide introduction part to electrolyze the salt water as well as reduce the carbon dioxide.

[Fig. 1]

[Fig. 2]

[Fig. 3]

[Fig. 4]

[Fig. 5]

[Fig. 6]

[Fig. 7]

[Fig. 8]

[Fig. 9]

[Fig. 10]

[Fig. 11]

[Fig. 12]

[Fig. 13]

[Fig. 14]

[Fig. 15]

$p-Ni_{0.5}Fe_{0.5}WO_4$

$p-Ni_{0.5}Fe_{0.5}WO_4$ cal

$p-NiFe$ oxide

$Ni_{1.43}Fe_{1.7}O_4$
PDF 01-080-0072

[Fig. 16]

[Fig. 17]

[Fig. 18]

[Fig. 19]

[Fig. 20]

[Fig. 21]

[Fig. 22]

[Fig. 23]

[Fig. 24]

[Fig. 25]

[Fig. 26]

Separating membrane, AEM

[Fig. 27]

CO₂ electrolysis

[Fig. 28]

Separating membrane, AEM

$O_2$

$OH^-$  $OH^-$  $OH^-$

$H_2$

$H_2O$

$CO$

$CO_2$

Anode

Cathode

NaCl  NaOH  NaCl  CO2

## INTERNATIONAL SEARCH REPORT

| International application No. |
| --- |
| **PCT/JP2021/037341** |

**A. CLASSIFICATION OF SUBJECT MATTER**

*C01G 53/00*(2006.01)i; *B01J 23/30*(2006.01)i; *B01J 37/08*(2006.01)i; *B01J 37/10*(2006.01)i; *C01B 13/08*(2006.01)i; *C25B 11/073*(2021.01)i
FI:  C01G53/00 A; B01J23/30 M; B01J37/08; B01J37/10; C01B13/08; C25B11/073

According to International Patent Classification (IPC) or to both national classification and IPC

**B. FIELDS SEARCHED**

Minimum documentation searched (classification system followed by classification symbols)

C01G53/00; B01J23/30; B01J37/08; B01J37/10; C01B13/08; C25B11/073

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | US 2009/0192032 A1 (SEOUL NATIONAL UNIVERSITY INDUSTRY FOUNDATION) 30 July 2009 (2009-07-30) claims 1-8, paragraphs [0004]-[0009], [0047]-[0062], table 1 | 1, 3 |
| A | | 2, 4-8 |
| A | JP 2019-172487 A (YAMAGUCHI UNIVERSITY) 10 October 2019 (2019-10-10) claims 1-10 | 1-8 |
| A | JP 2013-535081 A (BASF SOCIETAS EUROPAEA) 09 September 2013 (2013-09-09) entire text, all drawings | 1-8 |

☐ Further documents are listed in the continuation of Box C.      ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **13 December 2021** | **21 December 2021** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2021/037341**

| Patent document cited in search report | | | Publication date (day/month/year) | Patent family member(s) | | | Publication date (day/month/year) |
|---|---|---|---|---|---|---|---|
| US | 2009/0192032 | A1 | 30 July 2009 | KR 10-2009-0083239 | | A | |
| JP | 2019-172487 | A | 10 October 2019 | (Family: none) | | | |
| JP | 2013-535081 | A | 09 September 2013 | WO entire text, all drawings | 2011/161598 | A1 | |
| | | | | EP | 2586091 | A1 | |
| | | | | CN | 102948004 | A | |
| | | | | KR 10-2013-0036293 | | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Composite Metal Oxide-Carbon Nanotube Electrocatalysts for the Oxygen Evolution and Oxygen Reduction Reactions. *ChemElectroChem,* 2018, vol. 5, 2850-2856

- **JIE XU ; MINGSHUO WANG ; FEIYANG ; XIAOQIAN JU ; XILAI JIA.** *Inorg. Chem,* 2019, vol. 58, 13037-13048